Europäisches Patentamt

European Patent Office

Office européen des brevets

(19)

(11) Veröffentlichungsnummer: **0 474 973 A1**

# EUROPÄISCHE PATENTANMELDUNG

(12)

(21) Anmeldenummer: **91108748.4**

(22) Anmeldetag: **29.05.91**

(51) Int. Cl.⁵: **B65G 19/26**

(30) Priorität: **08.09.90 DE 4028635**

(43) Veröffentlichungstag der Anmeldung:
**18.03.92 Patentblatt 92/12**

(84) Benannte Vertragsstaaten:
**AT BE CH DE DK ES FR GB GR IT LI LU NL SE**

(71) Anmelder: **Wilhelm Bahmüller Maschinenbau Präzisionswerkzeuge GmbH
Industriegebiet-Ost
W-7067 Plüderhausen(DE)**

(72) Erfinder: **Vogt, Peter, Dipl.-Ing.(FH)
Schwarzwaldstrasse 136
W-7070 Schwäbisch Gmünd(DE)**

(74) Vertreter: **Rüger, Rudolf, Dr.-Ing. et al
Webergasse 3 Postfach 348
W-7300 Esslingen/Neckar(DE)**

(54) **Beweglicher Mitnehmer für eine Faltmaschine.**

(57) Eine Vorrichtung zum Falten von Faltschachtelzuschnitten (2) enthält in einem Gestell gelagert eine Vorschubeinrichtung für die Zuschnitte. Die Vorschubeinrichtung besteht aus parallel nebeneinander angeordneten Ketten (6), an denen äquidistant Mitnehmereinrichtungen (7) angebracht sind. Die Mitnehmereinrichtungen (7) weisen, um die Maschine auf unterschiedliche Formatgröße einstellen zu können, bewegliche Mitnehmerklinken (26) auf, die zwischen zwei Endstellungen hin- und herbewegt werden können. In der einen Endstellung kommen sie mit den Zuschnitten (2) in Eingriff, während sie in der anderen Endstellung mit den Zuschnitten (2) nicht in Berührung kommen können. Um die Mitnehmerklinken (26) in der Freilaufstellung zu halten, sind formschlüssig wirkende Sperrmittel vorhanden.

Fig. 3

Die Erfindung geht aus von einer Faltmaschine zum Falten von Faltschachtelzuschnitten, mit den Merkmalen des Oberbegriffs des Anspruches 1.

Um bei Faltmaschinen, wie sie beispielsweise aus der DE-OS 39 08 981 bekannt sind, die Faltschachtelzuschnitte durch die Maschine hindurchzubewegen, damit während dieser Bewegung die Seitenklappen von den den Außenseiten befindlichen Faltriemen umgeschlagen werden, sind beidseits der Mitte der Faltmaschine zwei Endlosketten vorgesehen. Die beiden Endlosketten tragen Mitnehmereinrichtungen, die an der stromaufwärts gelegenen Kante des betreffenden Zuschnittes angreifen und den Zuschnitt vorschieben. Der Abstand zwischen unmittelbar aufeinanderfolgenden Mitnehmereinrichtungen einer jeden Kette ist auf das größte normalerweise vorkommende Format für die Zuschnitte abgestimmt und stimmt mit der Teilung der Anlageflächen auf den profilierten Faltriemen überein. In Sonderfällen ist es jedoch möglich, mit der Faltmaschine auch Zuschnitte zu verarbeiten, die, in Bewegungsrichtung gesehen, Abmessungen haben, die die Teilungslänge übersteigen. Da diese Formate sehr selten auftreten und ihre standardmäßige Berücksichtigung, also eine Änderung der Teilung auf den Riemen und den Transporteinrichtungen eine erhebliche Leistungseinbuße zur Folge hätte, ist in solchen Fällen vorgesehen, jede zweite Mitnehmereinrichtung an jeder Kette zu demontieren, wenn tatsächlich solch große Formate verarbeitet werden, und nach dem Durchlauf der Charge die Faltmaschine zurückzurüsten.

Obgleich dieses Verfahren aufwendig ist, müssen die jeweils übernächsten Mitnehmer demontiert werden, weil sie sonst in die Rückseite des übergroßen Zuschnittes sich eindrücken würden und den Zuschnitt beschädigen.

Darüber hinaus ist es aus der DE-OS 30 05 753 für eine Vorrichtung zum Antreiben von Tafeln bekannt, die Mitnehmereinrichtungen mit Mitnehmerklinken zu versehen, die in einem Rahmen der Mitnehmereinrichtung schwenkbar gelagert sind. Die Mitnehmerklinken sind zwischen zwei Endstellungen hin- und herbewegbar, wobei die eine Endstellung die aktive Stellung ist, in der sie mit der stromaufwärts gelegenen Kante der Tafel in Eingriff kommen können. In diese aktive Stellung sind die Klinken federvorgespannt.

Werden Tafeln verarbeitet, deren Ausdehnung in Transportrichtung größer ist als die Teilung der aufeinanderfolgenden Mitnehmer, soll das Gewicht der Tafel die Mitnehmerklinke der unter ihr laufenden Mitnehmereinrichtung in die nicht aktive Stellung zurückdrücken.

Eine solche Anordnung kann jedoch bei schnellaufenden Faltmaschinen nicht angewendet werden. Schnellaufende Faltmaschinen erfordern eine sehr starke Federvorspannung der beweglichen Mitnehmerklinke, um nicht bei den bei dem Transmittel unweigerlich auftretenden Longitudinal- und Transversalschwingungen zu unterwünschten Bewegungen angeregt zu werden. Damit würde die Vorspannung der Klinke so hoch werden, daß sie nicht von dem auf ihr lastenden geringen Gewicht des entsprechenden Bereiches des Zuschnittes in die Ruhestellung zurückgedrückt werden kann, ohne daß Beschädigungen des Kartons auftreten. Dabei ist nämlich zu bedenken, daß der Kartonzuschnitt nicht zu seiner Gänze auf der Klinke ruht, sondern in genügendem Abstand von der Klinke aufgrund der Eigenelastizität auf den Führungseinrichtungen aufliegt, so daß nur ein verhältnismäßig kleines Gewicht des Kartons auf die Klinke tatsächlich einwirkt. Andererseits hat die Klinke beachtliche Abmessungen auch in Höhenrichtung, um dikke Dreifach- oder Vierfachwellpappe einwandfrei vor sich herschieben zu können, ohne die Kante zu beschädigen.

Ausgehend hiervon ist es Aufgabe der Erfindung, eine Faltmaschine zu schaffen, die schnell und leicht auf Zuschnitte umzurüsten ist, deren Größe das Teilungsmaß übersteigt, für das die Faltmaschine normalerweise vorgesehen ist.

Diese Aufgabe wird erfindungsgemäß durch eine Faltmaschine mit den Merkmalen des Anspruches 1 gelöst.

Die Verwendung der Sperreinrichtung für die bewegliche Mitnehmerklinke ermöglicht es, die Mitnehmerklinke zuverlässig in der Freilaufstellung zu halten, und zwar unabhängig davon, wie stark die Kraft der sie aufrichtenden Feder ist. Andererseits wird nur ein einziger leerer Durchlauf über die gesamte Länge des Transportmittels benötigt, um insoweit die Faltmaschine auf das andere Format, also entweder das Normalformat oder das übergroße Format umzustellen, ohne Montagearbeiten an den Mitnehmereinrichtungen selbst vornehmen zu müssen. Die Umrüstung ist damit wesentlich weniger fehlerbehaftet und läßt sich von außerhalb der Maschine durchführen, wenn entsprechende Steuerungen vorgesehen sind.

Mechanisch sehr einfache Verhältnisse liegen vor, wenn die Mitnehmereinrichtung eine Art Wagen ist, der auf einer Unterlage verläuft und von dem Transportmittel längs der Unterlage zumindest im Weg des Arbeitstrums geschleppt wird. Auftretende Kippmomente nimmt dabei im wesentlichen die Unterlage auf. Hierbei ist es dann besonders zweckmäßig, wenn die Mitnehmerklinke als Lasche oder Klappe gestaltet ist, die in den Rahmen der Mitnehmereinrichtung schwenkbar gelagert ist. In der Freilaufstellung nimmt die Anordnung dann einen besonders kleinen Raum ein, d.h. die Mitnebmereinrichtung baut in der Freilaufstellung sehr flasch.

Um die Mitnehmerklinke in die aktive Stellung zu überführen, ist sie, wenn sie als Lasche ausgebildet ist, mit einem über die Schwenkachse hinaus ragenden Ende versehen, an dem eine an dem Rahmen verankerte Zugfeder angreift.

Die Sperreinrichtung für die Mitnehmerklinke ist vorteilhafterweise von einem Haken gebildet, der in dem Rahmen schwenkbar gelagert ist und in die Eingriffsstellung mit der Mitnehmerklinke federvorgespannt ist. Dabei sind die Platzverhältnisse besonders günstig, wenn der Haken mit dem Fortsatz der Lasche zusammenwirkt, an dem auch die Zugfeder angreift. Weiterhin günstig für die Bauhöhe ist es, wenn die Schwenkachse der Lasche und die Schwenkachse des Hakens rechtwinklig zueinander ausgerichtet sind.

Besonders einfach gestalten sich die Mittel zum Einklappen der Mitnehmerklinke, wenn ihre Schwenkachse parallel zu der Knickachse der Mitnehmereinrichtung verläuft, also im Falle von Rollengliederketten parallel zu den Drehachsen der Rollen. Hierbei kann mit Hilfe der Vorwärtsbewegung das Einfahren der Lasche bewerkstelligt werden, wenn sie einfach über ein entsprechendes, in ihr Lichtraumprofil gestelltes Hindernis hinwegläuft.

Die Betätigung des Hakens der Sperreinrichtung wird sehr einfach, wenn der Haken mit einem Nockenfortsatz versehen ist, der wahlweise mit der zugehörigen zweiten Betätigungseinrichtung in Eingriff bringbar ist.

Wenn die erste und die zweite Betätigungseinrichtung längs dem Leerweg der Mitnehmereinrichtungen bzw. im Bereich des Leertrums des endlosen Transportmittels angeordnet sind, ergibt sich nicht die Gefahr einer Kollision mit den durch die Maschine laufenden Zuschnitten.

Eine einfache erste Betätigungseinrichtung besteht in einem schwenkbar gelagerten Hebel, dem eine Antriebseinrichtung zugeordnet ist, um den Hebel aus einer Ruhestellung, in der er sich außerhalb des Lichtraumprofils der vorbeilaufenden Mitnehmerklinke befindet, in eine aktive Stellung überführbar ist, in der er das Lichtraumprofil der in der aktiven Stellung befindlichen Klinke hineinragt, um sie in die Freilaufstellung zu überführen, bis die Sperreinrichtung einrastet. Das Eigengewicht des Transportmittels samt den daran hängenden Mitnehmereinrichtungen kann dabei ausgenutzt werden, um die notwendige Nachgiebigkeit beim Zusammenwirken zwischen der Mitnehmerklinke und dem Hebel zu erzielen. Hier ist es besonders günstig, wenn der Hebel, wie oben erwähnt, im Bereich des im allgemeinen nach unten durchhängenden Leertrums des Transportmittels angeordnet ist.

Zur Betätigung der Sperreinrichtung genügt eine einfache, drehbar gelagerte Rolle, die in ihrer aktiven Stellung in das Lichtraumprofil der Nockenbahn des Hakens ragt.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:

Fig. 1      eine Faltmaschine gemäß der Erfindung in einer perspektivischen, stark vereinfachten Übersichtsdarstellung,

Fig. 2      die Stellung der Mitnehmereinrichtungen der Faltmaschine nach Fig. 1, bei Verarbeitung des normalen Formates, in einer Seitenansicht,

Fig. 3      die Stellung der Mitnehmereinrichtungen bei Verarbeitung von übergroßen Formaten, in einer Seitenansicht,

Fig. 4      eine teilweise Explosionsdarstellung einer der Mitnehmereinrichtungen der Faltmaschine nach Fig. 1 in perspektivischer Ansicht,

Fig. 5 und 6      die Mitnehmereinrichtung nach Fig. 4, in einer Seitenansicht mit aufgeklappter bzw. eingeklappter Mitnehmerklinke,

Fig. 7      das Zusammenwirken der Mitnehmereinrichtung mit der ersten Betätigungseinrichtung in einer Seitenansicht und

Fig. 8      das Zusammenwirken der Mitnehmereinrichtung mit der zweiten Betätigungseinrichtung in einer Ansicht von unten.

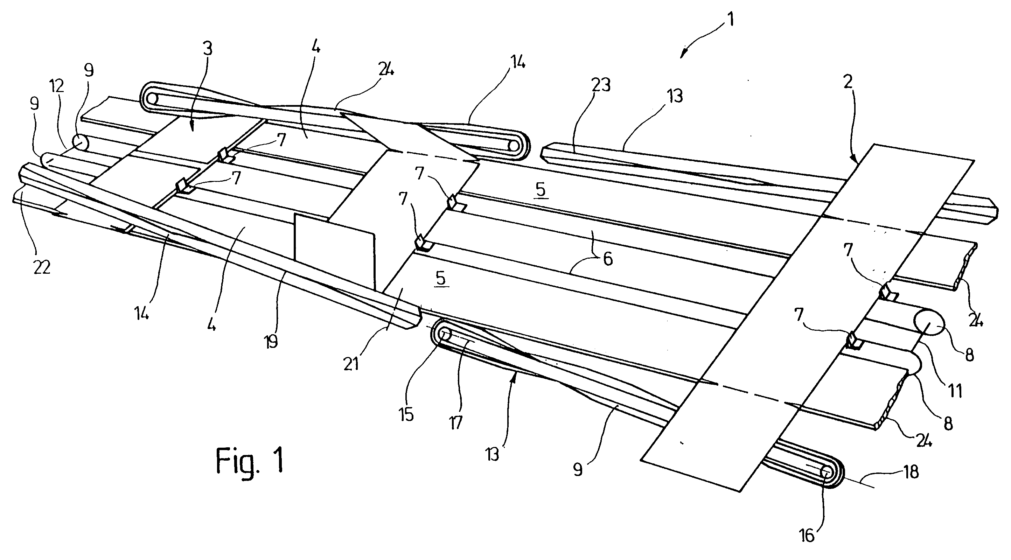

In Fig. 1 ist perspektivisch und stark schematisiert eine Faltmaschine 1 veranschaulicht, die dazu dient, ankommende und zunächst flachliegende Faltschachtelzuschnitte 2 in Faltschachtelschläuche 3 umzuformen, damit die überlappenden Ränder in einer nachfolgenden, nicht gezeigten Station mittels eines Klebers oder Heftklammern dauerhaft miteinander verbunden werden. Bei der Darstellung in Fig. 1 sind nur jene Teile gezeigt, die für das Verständnis der Erfindung notwendig sind, um andererseits die Übersichtlichkeit zu wahren.

Die Faltmaschine 1 enthält an der Oberseite eines horizontal und gerade sich erstreckenden Untergestells oder Rahmens, der im einzelnen nicht veranschaulicht ist, zwei parallel zueinander verlaufende Führungsschienen 4, deren auf gleicher Höhe liegende Oberseite 5 Gleit- oder Führungsbahnen bilden, auf denen die Faltschachtelzuschnitte 2, bezogen auf Fig. 1, von rechts kommend nach links durch die Faltmaschine 1 hindurchbewegt werden. Um die Faltschachtelzuschnitte 2 längs der Führungsschienen zu bewegen, ist eine Vorschubeinrichtung vorgesehen, die zwei parallel mit Abstand nebeneinander verlaufende endlose Transportmittel in Gestalt von zwei endlosen Rollengliederketten 6 enthält. Mit jeder der beiden Rollengliederketten 6 sind Mitnehmereinrichtungen 7 verbunden, die längs der zugehörigen Rollengliederkette 6 äquidistant verteilt angeordnet sind. Beide Rollengliederketten 6 sind synchron angetrieben, so daß ihre Mitnehmereinrichtungen 7, bezogen auf die Längsachse der Faltmaschine 1, miteinander fluchten. Die Teilung der Mitnehmereinrichtungen 7 längs den beiden Rollengliederketten 6 ist so gewählt, daß die größten normalerweise zu verarbeitenden Faltschachtelabschnitte 2 mit einer festgelegten kleinen Lücke hintereinander durch die Faltmaschine 1 hindurchlaufen.

Beide Rollengliederketten 6 laufen endseitig um Umlenkzahnräder 8 und 9 herum, die am Anfang und am Ende der Faltmaschine auf Achsen 11 bzw. 12 drehbar in dem nicht gezeigten Grundrahmen gelagert sind. Von diesen Umlenkzahnrädern 8, 9 sind beispielsweise die Umlenkzahnräder 9 lose laufend und die anderen Umlenkzahnräder 8 im allgemeinen Maschinentakt angetrieben, um die synchrone Bewegung zu erreichen und gleichmäßig die Zuschnitte 2 ohne Verkanten durch die Faltmaschine 1 hindurchzubewegen.

Längs beider Führungsschienen 4 weist die Faltmaschine 1 je zwei endlose Faltriemen 13 und 14 auf, die in ihrer allgemeinen Erstreckung seitlich unterhalb der Führungsbahn 5 beginnen und oberhalb der Führungsbahn 5 enden. Die beiden Faltriemen 13 sind ebenso wie die Faltriemen 14 spiegelbildlich bezüglich der Längsachse der Faltmaschine 1 angeordnet. Der Faltriemen 13 auf der linken Seite der Faltmaschine, gesehen in Bewegungsrichtung der Faltschachtelzuschnitte 2, läuft um zwei Riemenscheiben 15 und 16, die auf Achsen 17 und 18 des Grundrahmens drehbar gelagert sind. Eine der Riemenscheiben 15 bzw. 16 ist mit einer Antriebsvorrichtung gekuppelt, um die Faltriemen 13 synchron mit den Rollengliederketten 6 zu bewegen. Die Achsen 17 und 18 verlaufen parallel zueinander und unter einem Winkel von 45° gegenüber der durch die Führungsbahnen 5 definierten Ebene. Die Ausrichtung der Achsen 17 und 18 ist so, daß sie nach unten in Richtung auf die Symmetrieebene der Faltmaschine 1 zeigen, d.h. unter die Führungsschienen 4.

Der in Transportrichtung der Faltschachtelzuschnitte 2 folgende Faltriemen 14 ist ebenso wie der Faltriemen 13 endlos und verläuft im wesentlichen in Verlängerung des Faltriemens 13. Der Faltriemen 14 läuft um zwei endseitige Riemenscheiben um, von denen lediglich ihre Drehachsen 21 und 22 veranschaulicht sind. Die Drehachsen 21 und 22 sind parallel zueinander und rechtwinklig zu den Drehachsen 17 und 18 des Faltriemens 13. Die beiden Drehachsen 22 der beiden Faltriemen 14 liegen in einer gemeinsamen Ebene und konvergieren nach oben zu. Entsprechendes gilt für die beiden Drehachsen 21, während die Drehachsen 15 und 16 der beiden Faltriemen 13 auch jeweils paarweise in einer Ebene liegen, jedoch nach unten konvergieren. Die Faltriemen 14 sind ebenfalls synchron mit den Rollengliederketten 6 laufend angetrieben. Die nach außen weisende Seite aller Faltriemen 13, 14 ist mit einem Profil 23 bzw. 24 versehen, um trotz der Schräglage der Riemen 13, 14 zu den Faltschachtelzuschnitten 2 eine Anlagefläche zu erzeugen, die jeweils horizontal und parallel zu der zu erzeugenden Faltlinie verläuft. Hierdurch soll das sogenannte "Fishtailing" verhindert werden.

Die Teilung des Profils auf den Faltriemen 13, 14 stimmt mit der Teilung der Mitnehmereinrichtungen 7 überein.

Die Niederhalter, die dafür sorgen, daß beim Falten mit Hilfe der Faltriemen 13 die Faltschachtelzuschnitte 2 auf den Führungsbahnen 5 niedergehalten werden, sind der Übersichtlichkeit halber weggelassen.

Die Teilung der Mitnehmereinrichtungen 7 längs jeder Rollengliederkette 6 ist bei der Faltmaschine 1 so gewählt, daß einerseits bei gegebener Maschinenlänge ein brauchbarer Durchsatz erzielt werden kann, andererseits nahezu alle Formatgrößen für die Faltschachtelzuschnitte 2 verarbeitet werden können.

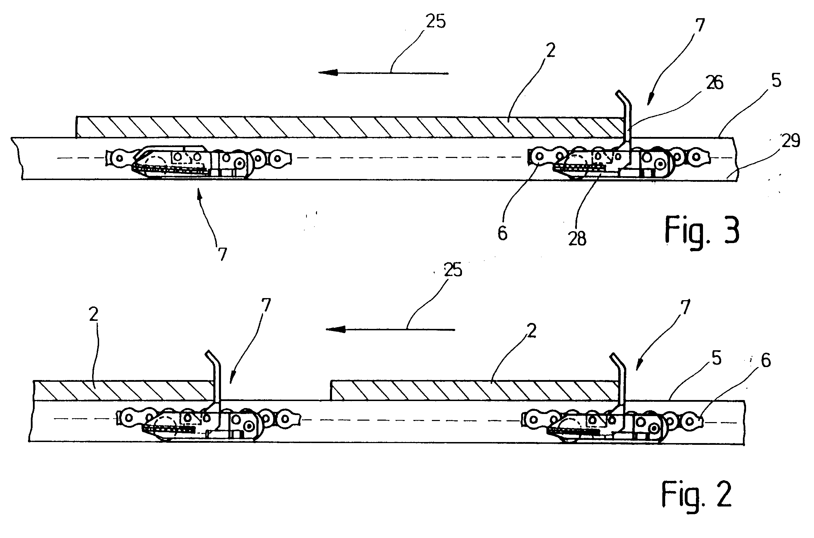

Fig. 2 zeigt, wie aufeinanderfolgende Faltschachtelzuschnitte 2 auf den Führungsbahnen 5 mittels der Mitnehmereinrichtungen 7 vorgeschoben werden, wobei ein Pfeil 25 die Bewegungsrichtung angibt. Ersichtlicherweise läuft die stromabwärts gelegene Kante des nachfolgenden Faltschachtelzuschnitts 2 in einem Abstand zu der stromaufwärts liegenden Kante des vorauslaufenden Zuschnitts 2. Der Abstand zwischen den beiden aufeinanderfolgenden Mitnehmereinrichtungen 7 längs der Rollengliederkette 6 ist unveränderlich und entspricht, wie oben erwähnt, der Teilung des Profils auf den Faltriemen 13, 14. Was die Abstandsverhältnisse anbelangt, so ist Fig. 2 hier nicht maßstabsgerecht. Wenn nun in Sonderfällen auch Faltschachtelzuschnitte 2 verarbeitet werden sollen, die das Teilungsmaß übersteigen, würde, wie Fig. 3 zeigt, der Faltschachtelzuschnitt 2 sich über die vorauslaufende Mitnehmereinrichtung 7 hinaus erstrecken. Wenn keine entsprechenden Vorkehrungen getroffen werden, würde die unter dem Faltschachtelzuschnitt 2 befindliche vorauslaufende Mitnehmereinrichtung 7 von unten her in den Faltschachtelzuschnitt 2 eindringen und ihn anheben bzw. beschädigen, weil er in unmittelbarer Nähe von den Niederhaltern auf die Führungsbahn 5 gedrückt wird.

Solche übergroßen Faltschachtelzuschnitte 2 gemäß Fig. 3 kommen hin und wieder in der Praxis vor und es wäre nicht sinnvoll, die Faltmaschine 1 von Haus aus auf solche großen Zuschnitte auszulegen, weil dann der Durchsatz bei den normalen Größen zu gering wäre. Gleichwohl lassen sich auch Übergrößen verarbeiten, wenn etwas geringere Anforderungen an die Qualität des fertigen Kartons gestellt werden.

Um eine Beschädigung des Faltschachtelzuschnitts 2 zu vermeiden, ist zumindest jede zweite Mitnehmereinrichtung 7 in der nachstehend im einzelnen erläuterten Weise ausgebildet. Dabei hat entweder jede oder zumindest jede zweite Mitnehmereinrichtung 7 eine Mitnehmerklinke in Gestalt einer Lasche 26, die in einem Laufwagen 28 schwenkbar gelagert ist. Der Laufwagen 28 läuft auf einer Bahn 29, die sich unterhalb des Laufwagens 28 und zumindest neben dem Arbeitstrum der Rollengliederkette 6 erstreckt (siehe Fig. 2 und 3). Hierdurch wird erreicht, daß jede Mitnehmereinrichtung 7 während ihres aktiven Weges, in dem sie einen Faltschachtelzuschnitt 2 vor sich her schiebt, auf konstanter Höhe knapp unterhalb der Führungsbahn 5 bewegt wird, so daß nur die Lasche 26 die Ebene der Faltschachtelzuschnitte 2 durchsetzt.

Jeder Laufwagen 28 enthält einen Rahmen mit zwei parallel und im Abstand nebeneinander verlaufenden Flanschen 30 und 31 auf, die durch zwei Querstege 32 und 33 einstückig miteinander verbunden sind. Der Laufwagen 28 hat dadurch etwa in der Draufsicht die Gestalt eines H mit zwei von dem Flansch 30 und 31 begrenzten Öffnungen 34 und 35. In der Öffnung 35, die zur Vorderseite hin durch den schmäleren Steg 33 abgeschlossen ist, befindet sich eine erste Laufrolle 36, die auf einer Achse 37 drehbar gelagert ist. Die Achse 37 steckt in einer entsprechenden, nicht erkennbaren Bohrung des Flansches 31, so daß die Laufrolle 36 in unmittelbarer Nachbarschaft der Innenseite des Flansches 31 läuft. Eine weitere Laufrolle 38 ist in der Nähe des hinteren Endes des Flansches 31 gelagert, und zwar auf einer Achse 39, die durch eine Bohrung in dem Flansch 30 die Laufrolle 38 in eine nicht erkennbare Bohrung in dem Flansch 31 ragt. Beide Laufrollen 36 und 38 schauen mit ihrer Außenumfangsfläche geringfügig über die Unterseite der beiden im wesentlichen zueinander spiegelbildlichen Flansche 30 und 31 hinaus. Sie haben wegen der Umlegbarkeit der Lasche 26 unterschiedlichen Durchmesser, wobei die vordere Laufrolle 36 kleiner ist als die hintere Laufrolle 38.

Um den Laufwagen 28 mit der Rollengliederkette 6 zu verbinden, enthält der Laufwagen 28 im Bereich des Steges 32 eine beide Flansche 30 und 31 durchsetzende Durchgangsbohrung 41. Hinter der Bohrung 41 befindet sich in dem Flansch 30 eine weitere Bohrung 42, die sich auf der gleichen Höhe befindet und mit einer in dem Flansch 31 befindlichen Bohrung 42 fluchtet. Der Abstand, den die Achse der Bohrung 41 von den Achsen der zueinander koaxialen Bohrungen 42 und 43 aufweist, entspricht dem Abstand, der zwischen zwei unmittelbar aufeinanderfolgenden Kettenbolzen der Rollengliederkette 6 liegt. Sie befinden sich außerdem auf einer Höhe, so daß die Rollengliederkette 6 in einem entsprechenden Abstand von der Bahn 29 gehalten wird.

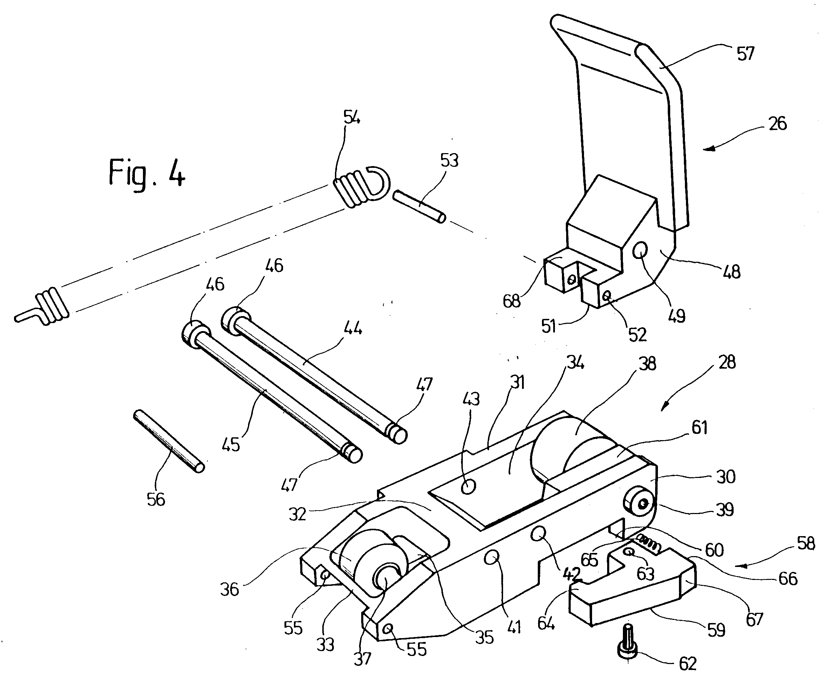

Die entsprechenden Kettenbolzen sind durch zwei entsprechende verlängerte Achsstifte 44 und 45 ersetzt, die an einem Ende Zylinderköpfe 46 tragen und am gegenüberliegenden Ende mit einer Sprengringnut 47 versehen sind. Zur Montage des Laufwagens 28 an der Rollengliederkette 6 werden die entsprechenden Kettenbolzen durch die beiden Achsstifte 44, 45 ersetzt, damit einerseits an dieser Stelle die Rollengliederkette 6 zusammengehalten wird, andererseits aber auch der Laufwagen starr mit der Rollengliederkette 6 verbunden ist. Die beiden Achsstifte 44 und 45 ragen bei montiertem Laufwagen 8 auf der dem Betrachter zugewandten Seite gemäß Fig. 4 durch die Bohrungen 41 und 42 hinaus, damit zur axialen Sicherung der Achsstifte 44 und 45 in die Sprengringnuten 47 entsprechende, nicht veranschaulichte Sprengringe eingesetzt werden können. In der entgegengesetzten Richtung übernehmen die zylindrischen Köpfe 46 die axiale Sicherung.

Infolge der Verbindung der Laufwagen 28 mit nur einem einzigen Kettenglied, dort jedoch an zwei Stellen entsprechend der Lage der Kettenbolzen, wird einerseits weder die Beweglichkeit der Kette beeinträchtigt, noch kann sich der Laufwagen 28 um die Achse eines der entsprechenden Kettenbolzen frei drehen. Er ist vielmehr starr mit dem betreffenden Kettenglied verbunden.

Der Achsstift 44 dient gleichzeitig als Achse zur Lagerung der Lasche 26, die mit ihrem rückwärtigen Ende einstückig mit einem Lagerblock 48 verbunden ist, der eine entsprechende Querbohrung 49 enthält. Im montierten Zustand befindet sich der Lagerblock 48 in der rückwärtigen Öffnung 34 zwischen den mit miteinander fluchtenden Bohrungen 42 und 43, so daß der Achsstift 44 durch die Lagerbohrung 49 hindurchführt. Die Lasche 26 ist dadurch bezüglich einer Achse schwenkbar, die der Knickachse der Rollengliederkette 26 entspricht, d.h. jener Achse, die parallel zu den Achsen der Umlenkzahnräder 8, 9 ausgerichtet ist.

Der Lagerblock 48 weist einen über die Lagerbohrung 49 hinausragenden gegabelten Fortsatz 51 auf, der etwa rechtwinklig zu der von der weitgehend planen Lasche 26 definierten Ebene liegt. Im aufgerichteten Zustand, wie er in Fig. 2 gezeigt ist, liegt der Fortsatz 21 formschlüssig und stumpf an der Unterseite des Steges 32 an, damit eine bezüglich Fig. 4 von links nach rechts wirkende Kraft die Lasche 26 nicht aus ihrer Stellung herausdrücken kann, bei der der wirksame Teil der Lasche 26 rechtwinklig über die Oberseite des Laufwagens 28 hinausragt.

Der gegabelte Forsatz 51 enthält eine durch die gegabelten Enden verlaufende Querbohrung 52 zur Aufnahme eines Stiftes 53 der als Widerlager für eine als Schraubenfeder ausgebildete Zugfeder 54 dient. Die Zugfeder 54 verläuft unterhalb des Steges 32 und in dem Spalt zwischen der Laufrolle 36 und der Innenseite des gegenüberliegenden Flansches 30 zu der Vorderseite des Laufwagens 28. Dort sitzt in entsprechenden miteinander fluchtenden Bohrungen 55 ein weiterer zylindrischer Stift 56, in den das andere Ende der Schraubenfeder 54 eingehängt ist. Die Zugfeder 54 spannt also ständig die Lasche 26 in die aufrechte Stellung vor, in der sie in der Lage ist, mit der stromaufwärts gelegenen Kante eines Faltschachtelzuschnittes 2 in Eingriff zu kommen. Um ein Aufsteigen der Zuschnitte 2 längs der Lasche 26 zu verhindern, ist sie an ihrem oberen Ende bei 57 geringfügig in die Bewegungsrichtung der Faltschachtelzuschnitte 2 abgebogen. Ihre wirksame Fläche, die sich zwischen dem abgebogenen Ende 57 und dem Lagerblock 48 befindet, verläuft jedoch rechtwinklig zu der von der Führungsbahn 5 definierten Ebene.

Um die Lasche 26 in ihrer inaktiven oder Freilaufstellung zu halten, wie sie in Fig. 3 links veranschaulicht ist, ist eine Sperreinrichtung 58 vorhanden. In der Freilaufstellung liegt die Lasche 26 etwa parallel zu der Oberseite des zugehörigen Laufwagens 28, d.h. parallel zu der Oberseite der Flansche 30 und 31, die zur Aufnahme des abgewinkelten Abschnittes 57 der Lasche 26, wie Fig. 4 erkennen läßt, geringfügig nach vorne zu abgeschrägt sind.

Die Sperreinrichtung 58 enthält einen Haken 59, der um eine zu der Lagerbohrung 49 rechtwinklige Achse in dem Flansch 30 schwenkbar gelagert ist. Der Flansch 30 ist zur Aufnahme des Hakens 59 mit einer Ausnehmung 60 an der Unterseite versehen.

Auf der Innenseite des Flansches 30 befindet sich auf der Achse 39, die beispielsweise von einer Inbusschraube gebildet ist, eine Distanzplatte 61, die an ihrem dem Steg 32 benachbarten Ende eine von unten her in die Distanzplatte hineinführende Bohrung für eine Schraube 62 enthält. Auf dem Schaft der Kopfschraube 62 steckt mit einer entsprechenden Durchgangsbohrung 63 der Haken 59, der dadurch in der Ausnehmung 61 zumindest begrenzt schwenkbar angeordnet ist. Nach vorne zu in dem Laufwagen 28 trägt der Haken 29 eine Hakennase 64, die in den Bewegungsweg des Fortsatzes 51 der Lasche 26 hineinragt. Mittels einer als Schraubenfeder ausgebildeten Druckfeder 65 wird der Haken 59 in die Eingriffsstellung mit dem Fortsatz 51 vorgespannt. Die Druckfeder 25 sitzt in einer entsprechenden Sackbohrung der Distanzplatte 61 und greift andernends in eine damit fluchtende Bohrung in einen Fortsatz 66 des Hakens 59 ein. Der Fortsatz 66 liegt bezüglich der Bohrung 63 der Hakennase 64 diametral gegenüber.

Der Haken 59 ist außerdem mit einer Nockenfläche 67 versehen, die sich am Rücken des Hakens 59 von der Hakennase 64 bis hin zu dem Fortsatz 66 erstreckt. Die Nockenfläche 67 steht über die Außenfläche des Flansches 30 vor.

Die genaue Lage der Nockenfläche 67 sowie die Relativlage der Hakennase 64 gegenüber dem Fortsatz 51 der Lasche 26 ergibt sich eine aus der Funktionsbeschreibung.

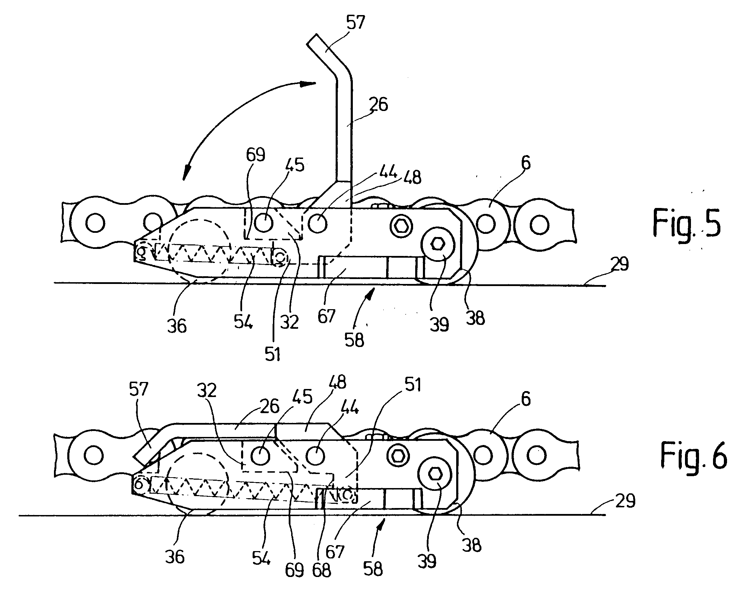

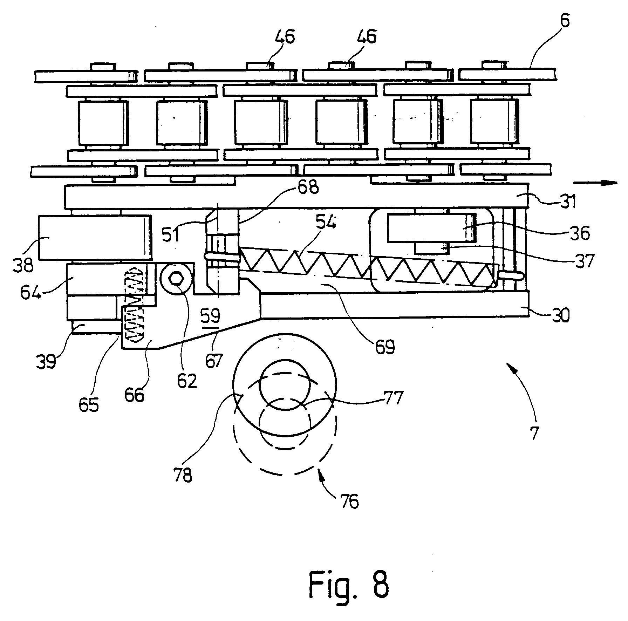

Zur Erläuterung der Funktion sei angenommen, daß die Faltmaschine 2 auf die normale Größe der Faltschachtelzuschnitte 2 eingestellt ist. In dieser Betriebsstellung sind die Laschen 26 sämtlicher aufeinanderfolgender Mitnehmereinrichtungen 7, wie Fig. 2 zeigt, aufgerichtet, damit die Laschen 26 mit den Faltschachtelzuschnitten 2 in Eingriff kommen können. In dieser aufgerichteten Stellung werden sie von der jeweils zugehörigen Zugfeder 54 gehalten. Die Sperreinrichtung 58 ist in dieser Stellung wirkungslos, d.h. die Hakennase 64 liegt auf der benachbarten Seitenfläche des Lagerblocks 48 auf. Gleichzeitig liegt der gegabelte Fortsatz 51 mit seiner in Fig. 4 nach oben weisenden Anschlagfläche 68 stumpf an einer komplementären Anschlagfläche 69 der Unterseite des Steges 32 an. Die Anschlagfläche 69 ist in den Fig. 5 und 6 gestrichelt veranschaulicht bzw. in Fig. 8 in einer Draufsicht zu erkennen. Die Lasche 26 wird dadurch formschlüssig in der aufrechten Stellung gehalten.

Wenn die Faltmaschine 1 unter Vernachlässigung der mit dem Profil versehenen Faltriemen 13 und 14 erzielbaren Vorteile Faltschachtelzuschnitte 2 verarbeiten soll, die größer sind als es der Teilung des Profils der Faltriemen 13, 14 entspricht, muß die Lasche 26 jeder zweiten Mitnehmereinrichtung 7 umgeklappt werden. Damit nicht ständig Umstellungen erforderlich sind, trägt jede Rollengliederkette 6 eine gerade Anzahl von Mitnehmereinrichtungen 7, so daß längs der Rollengliederkette 6 jeweils eine aktive Mitnehmereinrichtung 7 auf eine in der Freilaufstellung befindliche folgt.

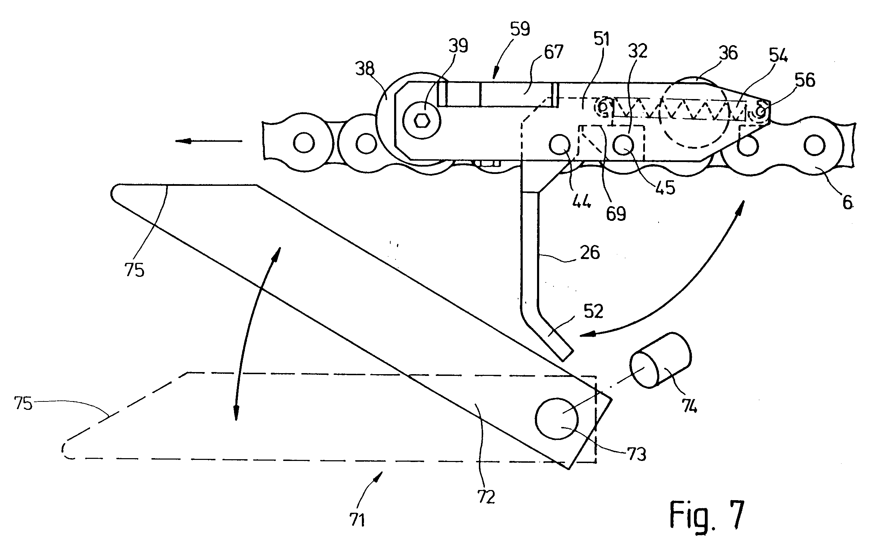

Zum Umstellen der Mitnehmereinrichtungen 7 befindet sich im Bereich des Leertrums jeder Rollengliederkette 6 eine in Fig. 7 veranschaulichte erste Betätigungseinrichtung 71. Im Bereich des Leertrums läuft die Rollengliederkette 6 über Unterstützungsrollen, die im einzelnen nicht veranschaulicht sind, und hängt zwischen den Unterstützungsrollen jeweils frei durch. Etwa in der Mitte zwischen zwei benachbarten Unterstützungsrollen befindet sich die in Fig. 7 gezeigte erste Betätigungseinrichtung 71, die von der Nachgiebigkeit der zwischen den Unterstützungsrollen frei durchhängenden, jedoch gespannten Rollengliederkette 6 Gebrauch macht.

Die erste Betätigungseinrichtung 71 enthält eine Betätigungsschiene 72, die als einarmiger Hebel ausgebildet ist. Die Betätigungsschiene 72 sitzt drehfest auf einer Welle 73, die mit einer Antriebseinrichtung 74 gekuppelt ist. Mittels der Antriebseinrichtung 74 kann die Betätigungsschiene 72 aus der gestrichelten Ruhestellung in die in durchgezogenen Linien gezeigte aktive Stellung überführt werden. Die Betätigungsschiene 72 ist an ihrem von der Lagerwelle 73 abliegenden Ende mit einer Schrägfläche 75 versehen.

In der in Fig. 7 gezeigten Ruhestellung der Betätigungsschiene 72 ist sie auf dem Lichtraumprofil der Laschen 26 der vorbeilaufenden Mitnehmereinrichtungen 7 herausgeschwenkt, so daß keine Berührung zwischen Teilen der Mitnehmereinrichtung 7 und der Betätigungsschiene 72 stattfindet. Wenn, wie vorher erwähnt, eine Umrüstung auf übergroße Formate erreicht werden soll, wird die Vorschubeinrichtung mit langsamer Geschwindigkeit in der entgegengesetzten Richtung in Bewegung gesetzt, d.h. die Rollengliederketten 6 laufen entgegen der Richtung des Pfeiles 25, oder mit anderen Worten, das Leertrum bewegt sich in die Richtung, in der normalerweise die Faltschachtelzuschnitte 2 durch die Faltmaschine 1 hindurchtransportiert werden. Wenn nun die gewünschte umzustellende Mitnehmereinrichtung 7 in der Nähe der ersten Betätigungseinrichtung 71 ankommt, wird deren Antriebseinrichtung 74 in Gang gesetzt, um die Betätigungsschiene 72 in die aktive Stellung zu verschwenken, in der sie in einem spitzen Winkel zu der Rollengliederkette 6 verläuft. Die Betätigungsschiene 72 ragt dabei in das Lichtraumprofil der Lasche 26, nicht jedoch in das Lichtraumprofil des Laufwagens 28. Sobald mit Hilfe der Rollengliederkette 6 die Mitnehmereinrichtung 7 an der Betätigungsschiene 72 vorbeibewegt wird, wird die Lasche 26, bezogen auf Fig. 7, im Uhrzeigersinn auf den zugehörigen Achsstift 44 entgegen der Wirkung der Zugfeder 54 verschwenkt. Die Lasche 26 gleitet dabei auf dem an sich gerade erstreckenden Rücken der Betätigungsschiene 72 bis zu der Schrägfläche 75, die in der aktiven Stellung der Betätigungsschiene parallel zur Bewegungsrichtung der Rollengliederkette 6 verläuft. Spätestens auf der Schrägfläche 75 ist die Lasche 26 so weit verschwenkt, daß ihr Fortsatz 51 die Hakennase 64 passiert hat. Die Druckfeder 65 läßt die Hakennase 64 vorschnellen und in den Bewegungsweg des vorher daran vorbeigelaufenen Fortsatzes 51 eindringen. Wenn nun die Mitnehmereinrichtung 7 die Betätigungsschiene 72 vollständig passiert hat, kann die Lasche 26 höchstens so weit zurückschwenken, bis ihr Fortsatz 51 mit seiner Anschlagfläche 68 formschlüssig und stumpf gegen die Hakennase 64 anliegt. Ein weiteres Verschwenken unter der Wirkung der Zugfeder 54 ist nicht mehr möglich. Die Lasche 26 wird deswegen beim Passieren der ersten Mitnehmereinrichtung 41 aus der in Fig. 5 gezeigten Stellung in die in Fig. 6 gezeigte Stellung überführt, in der die Lasche 26 im wesentlichen parallel zu der Oberseite des Laufwagens 28 liegt.

Da bei der nächsten Mitnehmereinrichtung 7 die Lasche 26 nicht umgeklappt werden soll, wird nach dem Passieren einer Mitnehmereinrichtung 7 durch Ingangsetzen der Antriebseinrichtung 74 die Betätigungsschiene 72 wieder in die Ruhestellung zurückgeschwenkt, damit die nachfolgende Mitnehmereinrichtung 7 frei passieren kann. Erst daran anschließend wird von der Antriebseinrichtung 74 die Betätigungsschiene 72 wieder angehoben, um bei der übernächsten Mitnehmereinrichtung 7 die Lasche 26 aus der aktiven in die Freilaufstellung zu überführen. Dieser Vorgang hält solange an, bis auf beiden Rollengliederketten 6 bei jeder zweiten Mitnehmereinrichtung 7 die Lasche 26 in die Freilaufstellung überführt ist, in der sie von der Sperreinrichtung 58 auch gehalten wird. Damit ist insoweit die Faltmaschine 1 auf übergroße Formate umgestellt und die Vorschubeinrichtung, d.h. die Rollengliederketten 6, können nun wieder in der normalen Laufrichtung arbeiten und gemäß Fig. 3 Faltschachtelzuschnitte 2 durch die Faltmaschine 1 transportieren.

Die nach dem Einklingen der Sperreinrichtung 58 erreichte Stellung zeigt Fig. 8, die eine Draufsicht auf die Unterseite der Mitnehmereinrichtung 7 bzw. den Laufwagen zeigt. Ersichtlicherweise greift die in der Ausnehmung 60 bewegliche Hakennase 64 hinter die Anlagefläche 68, damit eine formschlüssige Verriegelung zustandekommt. In dieser Stellung bildet die Nockenfläche 57 eine Rampenfläche, die in der Nähe der Hakennase 64 auf der Ebene der Außenfläche des Flansches 30 beginnt und sich in Richtung auf den Fortsatz 66 ein Stück weit aus der Außenfläche des Flansches 30 erhebt. In der eingerasteten Stellung wird die Hakennase 64 von der Druckfeder 65 gehalten, die zwischen der Distanzplatte 61 und dem Fortsatz 66 angeordnet ist.

Um die Faltmaschine 1 auf das normale Format zurückzustellen, ist eine in Fig. 8 vorgesehene zweite Betätigungseinrichtung 76, vorhanden, die ebenfalls im Bereich des Leertrums einer jeden Rollengliederkette 6 angeordnet ist. Die zweite Betätigungseinrichtung 76 besteht aus einem auf einem Hebel 77 gelagerten Wälzlager 78 und kann durch den Hebel 77, dessen Schwenkachse in Bewegungsrichtung der Rollengliederkette 6 verläuft, aus einer Ruhestellung in eine Arbeitsstellung überführt werden. In der Ruhestellung, die in Fig. 8 gestrichelt angedeutet ist, befindet sich das Wälzlager 78 außerhalb des Lichtraumprofils der vorbeilaufenden Nockenfläche 59,in der aktiven Stellung hingegen, die Fig. 8 in durchgezogenen Linien zeigt, ist die Außenumfangsfläche des Wälzlagers 78 in den Bewegungsweg der Nockenfläche 67 hineinbewegt, so daß beim Vorbeischleppen der Mitnehmereinrichtung 7 an der zweiten Betätigungseinrichtung 76 die Nockenfläche 67 mit dem Wälzlager 78 in Eingriff kommt. Dadurch wird der Haken 59, bezogen auf Fig. 8, im Uhrzeigersinne verschwenkt, sobald das Wälzlager 78 die durch die Schraube 62 definierte Schwenkachse passiert hat. Hierdurch wird die Hakennase 64 außer Eingriff mit dem Fortsatz 51 gebracht und die Zugfeder 54 läßt die Lasche 26 in die Arbeitsstellung gemäß Fig. 5 zurückschnappen.

Mit der beschriebenen Anordnung ist es möglich, ohne Montagearbeiten an der Faltmaschine 1, zwei grundsätzlich unterschiedliche Formate zu verarbeiten, und zwar solche, die in die Teilung der Mitnehmereinrichtungen 7 längs der Vorschubeinrichtung passen und solche, die größer sind als die Teilung, d.h. der Abstand benachbarter Mitnehmereinrichtungen 7. In der Arbeitsstellung werden die Laschen 26 durch Federvorspannung gehalten, während die Umstellung im Rückwärtslauf der Vorschubeinrichtung erfolgt, wobei jede zweite Lasche 26, und zwar für beide Rollengliederketten 6, synchron und gleichmäßig mit Hilfe der ersten Betätigungseinrichtung 71 umgelegt wird. In der umgelegten Stellung werden die Laschen 26 durch formschlüssig wirkende Sperreinrichtungen 58 gehalten, die sicherstellen, daß auch bei den Zentrifugalkräften, die beim Umlaufen der Rollengliederketten 6 um die Umlenkräder 8 und 9 auftreten, kein Wegklappen der Laschen 26 erfolgt.

Bei dem veranschaulichten Ausführungsbeispiel sind die aufeinanderfolgenden Mitnehmereinrichtungen 7 längs den beiden Rollengliederketten 6 aus Darstellungsgründen gleich aufgebaut. Es versteht sich jedoch, daß dasselbe Ziel auch erreicht werden kann, wenn lediglich jede zweite Mitnehmereinrichtung 7 verstellbar und die dazwischenliegenden Mitnehmereinrichtungen mit einer starren Lasche 26 versehen ist. Es genügt, wenn die erste Betätigungseinrichtung 71 entsprechend synchronisiert ist, damit Kollisionen zwischen den starren Mitnehmereinrichtungen und den verstellbaren vermieden werden.

**Patentansprüche**

1. Vorrichtung (1 ) zum Falten von im Ausgangszustand flachliegenden Faltschachtelzuschnitten (2), die ein Mittelstück sowie zwei mit dem Mittelstück verbundene und auf das Mittelstück umzufaltende Seitenklappen aufweisen, mit einem Gestell, mit einer in dem Gestell angeordneten Vorschubeinrichtung (6, 7), die, um die Zuschnitte (2 ) durch die Vorrichtung (1 ) zu schieben, wenigstens ein endloses, parallel zu der Bewegungsrichtung der Zuschnitte (2 ) verlaufendes Transportmittel (6 ) aufweist, das um in dem Gestell drehbar gelagerte Umlenkräder (8, 9) umläuft, von denen wenigstens eines angetrieben ist, mit wenigstens zwei an jedem Transportmittel (6 ) vorhandenen Mitnehmereinrichtungen (7 ), die längs dem zugehörigen Transportmittel (6 ) äquidistant verteilt sind und von denen wenigstens eines je Transportmittel (6 ) eine Mitnehmerklinke (26) aufweist, die zwischen zwei Endstellungen wahlweise hin- und herbewegbar ist, wobei eine Endstellung die aktive Stellung ist, in der die Mitnehmerklinke (26) mit einer entsprechenden Kante eines Zuschnittes (2) in Eingriff zu bringen und in die die Mitnehmerklinke (26) federvorgespannt ist, während die andere Endstellung die Freilaufstellung ist, in der ein Zuschnitt nicht mit der Mitnehmerklinke (26) in Eingriff gelangen kann, dadurch gekennzeichnet, daß die Mitnehmereinrichtung (7) eine Sperreinrichtung (58) aufweist, die mittels formschlüssig wirkender Mittel (59) die in die Freilaufstellung überführte Mitnehmerklinke (26) in der Freilaufstellung hält, und daß im Lauf der Mitnehmereinrichtung (7) eine erste Betätigungseinrichtung (71) angeordnet ist, um wahlweise die Mitnehmerklinke (26) in die Freilaufstellung zu überführen, sowie eine zweite Betätigungseinrichtung (76) vorhanden ist, um wahlweise die Sperreinrichtung (58) im Sinne des Freigebens der Mitnehmerklinke (26) zu betätigen.

2. Vorrichtung nach Anspruch 1, dadurch gekennzeichnet, daß nur jede zweite Mitnehmereinrichtung (7) längs eines jeweiligen Transportmittels (6) mit der beweglichen Mitnehmerklinke (26) versehen ist.

3. Vorrichtung nach Anspruch 1, dadurch gekennzeichnet, daß die Mitnehmereinrichtung (7 ) einen mit dem Transportmittel (6 ) verbundenen Rahmen (30, 31, 32, 33) aufweist, in dem die Mitnehmerklinke (26) beweglich gelagert ist.

4. Vorrichtung nach Anspruch 1, dadurch gekennzeichnet, daß die Mitnehmerklinke (26) eine in dem Rahmen (30,31,32, 33) schwenkbar gelagerte Lasche (26) ist, die sich in der Freilaufstellung in Richtung parallel zu dem zugehörigen Transportmittel (6 ) erstreckt und in der aktiven Stellung im wesentlichen senkrecht zu der Bewegungsrichtung des Transportmittels (6 ) ausgerichtet ist.

5. Vorrichtung nach Anspruch 4, dadurch gekennzeichnet, daß die Mitnehmerklinke (26) ein über ihre Schwenkachse (49) hinausragendes Ende (51) aufweist, an dem eine in dem Rahmen (30, 31, 32, 33) verankerte Zugfeder (54) angreift.

6. Vorrichtung nach Anspruch 1, dadurch gekennzeichnet, daß die Mitnehmereinrichtung (7 ) mit drehbar gelagerten Laufrollen (36, 38) versehen ist, und daß die Vorschubeinrichtung eine neben dem Arbeitstrum jedes Transportmittels (6 ) sich erstreckende Laufffläche (29) für die Laufrollen (36, 38) jeder Mitnehmereinrichtung (7) aufweist.

7. Vorrichtung nach Anspruch 1, dadurch gekennzeichnet, daß jedes Transportmittel von einer Gliederkette (6 ), vorzugsweise einer Rollengliederkette, gebildet ist, an der die dem betreffenden Transportmittel (6 ) zugeordneten Mitnehmereinrichtungen (7 ) angebracht sind.

8. Vorrichtung nach Anspruch 1, dadurch gekennzeichnet, daß die Sperreinrichtung (58) für die Mitnehmerklinke (26) von einem Haken (59) gebildet ist, der in dem Rahmen (30, 31, 32, 33) schwenkbar gelagert ist und in die Eingriffsstellung mit der Mitnehmerklinke (26) federvorgespannt ist.

9. Vorrichtung nach den Ansprüchen 5 und 8, dadurch gekennzeichnet, daß der Haken (59) mit dem Fortsatz (51) der Lasche (26) zusammenwirkt, an dem die Zugfeder (54) angreift.

10. Vorrichtung nach den Ansprüchen 4 und 8, dadurch gekennzeichnet, daß die Schwenkachse (49) der Lasche (26) und die Schwenkachse (62) des Hakens (59) rechtwinklig zueinander ausgerichtet sind.

11. Vorrichtung nach Anspruch 8, dadurch gekennzeichnet, daß der Haken (59) jenseits seiner Schwenkachse (62) mit einer Nockenfläche (67) versehen ist, die mit der zweiten Betätigungseinrichtung (26) zum Zweck des Verschwenkens des Hakens (59) in Eingriff zu bringen ist.

12. Vorrichtung nach Anspruch 4, dadurch gekennzeichnet, daß die Schwenkachse (49) der Lasche (26) parallel der Knickachse des Transportmittels (6) verläuft. verläuft.

13. Vorrichtung nach Anspruch 1, dadurch gekennzeichnet, daß die erste und die zweite Betätigungseinrichtung (71, 76) längs dem Leerweg der Mitnehmereinrichtungen (6) angeordnet sind.

14. Vorrichtung nach Anspruch 1, dadurch gekennzeichnet, daß die erste Betätigungseinrichtung (71) von einem in dem Gestell schwenkbar gelagerten Hebel (72) sowie einer dem Hebel (72) zugeordneten Antriebseinrichtung (74) gebildet ist, und daß der Hebel (72) der ersten Betätigungseinrichtung (71) aus einer Ruhestellung, in der sie außerhalb dem Lichtraumprofil der vorbeilaufenden, in der aktiven Stellung befindlichen Mitnehmerklinke (26) steht, in eine aktive Stellung überführbar ist, die die Mitnehmerklinke (26) beim Vorbeilauf in die Freilaufstellung bis zum Einrasten der Sperreinrichtung (58) überführt.

15. Vorrichtung nach Anspruch 14, dadurch gekennzeichnet, daß der ersten Betätigungseinrichtung (71) eine Steuereinrichtung zugeordnet ist, die die Antriebseinrichtung (74) so betätigt, daß die erste Betätigungseinrichtung (71) lediglich beim Vorbeilauf der Mitnehmereinrichtung (7 ) mit der beweglichen Mitnehmerklinke (26) aktiviert ist und anschließend in die Ruhestellung zurückgebracht wird.

16. Vorrichtung nach Anspruch 1, dadurch gekennzeichnet, daß die zweite Betätigungseinrichtung (76) für die Sperreinrichtung (58) von einer drehbar gelagerten Rolle (78) gebildet ist, die zwischen einer aktiven und einer Ruhestellung hin- und herbewegbar ist und lediglich in der aktiven Stellung mit der Sperreinrichtung (58) der vorbeilaufenden Mitnehmereinrichtung (7 ) in Eingriff kommt.

Fig. 1

Fig. 3

Fig. 2

EP 0 474 973 A1

Fig. 4

EP 0 474 973 A1

Fig.5

Fig.6

13

Fig. 7

EP 0 474 973 A1

Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-449 514 (JOVY H.) | 1,3-5,14 | B65G19/26 |
| A | * Spalte 2, Zeile 21 - Spalte 4, Zeile 13; Abbildungen * | 2,5,9 | |
| | --- | | |
| A | GB-A-101 602 (WILLS W.) | 1-3,11, 14 | |
| | * Ansprüche 1-2; Abbildungen * | | |
| | --- | | |
| X | DE-A-2 227 294 (FIORAVANTI P.) | 1-4 | |
| A | * Ansprüche 1-3; Abbildungen * | 5,10,14 | |
| | --- | | |
| A | AT-A-316 417 (INTERCONT-FERROMATIC TRUST REG.) * Seite 4, Zeile 31 - Zeile 49; Abbildungen 5,6 * | 1,4,8,11 | |
| | ----- | | RECHERCHIERTE SACHGEBIETE (Int. Cl.5) |
| | | | B65G |

Der vorliegende Recherchenbericht wurde für alle Patentansprüche erstellt

| Recherchenort | Abschlußdatum der Recherche | Prüfer |
|---|---|---|
| DEN HAAG | 03 DEZEMBER 1991 | VAN ROLLEGHEM F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument